# EUROPEAN PATENT SPECIFICATION

(11) **EP 2 329 998 B1**
(45) Date of publication and mention of the grant of the patent: **27.07.2016**
(21) Application number: 10192511.3
(22) Date of filing: 25.11.2010
(51) Int. Cl.: H01H 35/24, B60N 2/00, B60R 21/015, H01H 13/702

(54) **Seat occupancy detection device**
Vorrichtung zur Sitzbelegungserkennung
Dispositif de détection de l'occupation d'un siège

(30) Priority: 04.12.2009 JP 2009276112
(43) Date of publication of application: 08.06.2011
(73) Proprietor: AISIN SEIKI KABUSHIKI KAISHA, Kariya-shi, Aichi 448-8650 (JP)
(72) Inventor: Yanai, Keiichi, Kariya-shi Aichi 448-8650 (JP); Otake, Wataru, Kariya-shi Aichi 448-0027 (JP); Takuma, Setsu, Kariya-shi Aichi 448-8650 (JP); Kondo, Hiromi, Kariya-shi Aichi 448-0027 (JP)
(74) Representative: TBK

(56) References cited:
- EP-A1- 1 818 208
- US-A1- 2008 121 511
- US-A1- 2009 107 258

## Description

### TECHNICAL FIELD

This disclosure relates to a device which is adapted to be provided at a seat of a vehicle and detects a seating state of an occupant seated on the seat (see, for example, US 2008/012 1511 A1, corresponding to the preamble of claim 1).

### BACKGROUND DISCUSSION

In order to improve a performance of safety apparatuses including a seatbelt or airbag that is provided at a vehicle, a seating state of an occupant seated on a seat of the vehicle may be detected for controlling these safety apparatuses. However, not only the occupant is seated on the seat but also a luggage may be placed on the seat, therefore it is extremely important to distinguish the occupant from the luggage or the like and to make a correct determination of the seating state of the occupant in order to operate the safety apparatuses correctly.

A thin and flexible membrane switch may be used to detect the seating state of the occupant. A known seating sensor that uses the thin and flexible membrane switch is disclosed in JP 2008-157914A (Patent Document 1). The disclosed seating sensor includes a first film formed in a linear arrangement, a second film formed in the same shape as the first film and arranged to face the first film, sensor electrodes arranged between the first film and the second film to form a sensor cell, the sensor electrodes being normally spaced apart from each other and coming in contact with each other upon receiving a load, conducting electrodes arranged between the first film and the second film, and conductive to the sensor electrodes, and a connector coupled to ends of the first film and the second film to be conductive to the sensor electrodes via the conducting electrodes. The seating sensor is arranged in a seat surface of a seat of a vehicle in a manner to extend in a diagonal direction of the seat surface relative to a lateral direction of the vehicle so that two sensor cells are located at positions that correspond to a position of the buttocks of the occupant when the occupant is seated on the seat cushion in a normal posture.

A seating pressure caused by a seating load of the occupant, however, is applied to varied areas of the seat surface of the seat cushion depending on a posture of the occupant who is seated thereon. A material of the seat cushion may be hardened at a low temperature of a vehicle interior, and thus the area to which the pressure is applied may be decreased. According to the seating sensor disclosed in the Patent Document 1, an example where two sensor cells (contact portions) are employed is described, however, none of the number of the sensor cells required, a pitch between the sensor cells or an arrangement of the sensor cells is clearly defined. Consequently, a seat occupancy may not be correctly detected depending on the posture of the occupant or a thermal environment of the vehicle interior.

A need thus exists for a seat occupancy detection device that correctly detects the seating state of the occupant when the occupant is seated at a position that is deviated relative to a standard position in a longitudinal or a lateral direction of the vehicle, or at various temperatures.

### SUMMARY

According to the present invention as defined by the technical features set forth in claim 1, a seat occupancy detection device includes a membrane switch formed in a bar shape and adapted to be provided at a seat cushion. The membrane switch includes a plurality of contact portions arranged in a straight line in a lengthwise direction of the membrane switch and outputs a seat occupancy detection signal when two contact portions from among the plurality of contact portions are turned on at the same time by a load of an occupant seated on the seat cushion, the two contact portions from among the plurality of contact portions being arranged at at least every other contact portion. The membrane switch is provided at the seat cushion in a manner that at least a set of the two contact portions is positioned in a seating load area when the seating load area is positioned anywhere among four seating load areas. Each of the four seating load areas receives the load of the occupant who is seated on the seat cushion, and is most deviated in a longitudinal direction or a lateral direction of a vehicle on which the seat cushion is mounted relative to a standard position located in a rear center portion of the seat cushion.

Consequently, it is prevented that the seat occupancy detection signal is outputted when one of the contact portions of the membrane switch is turned on by a load that is applied to a small area of the seat cushion, for example, when the baggage is placed on the seat cushion. And thus, a false detection is prevented. In addition, the membrane switch is provided at the seat cushion in a manner that at least a set of the two contact portions is positioned in the seating load area when the seating load area is positioned anywhere among the four seating load areas, the four seating load areas each being most deviated in the longitudinal direction or the lateral direction of the vehicle on which the seat cushion is mounted relative to the standard position. Consequently, the seating state of the occupant on the seat cushion is reliably detected.

Additional features of the invention are disclosed in the dependent claims.

According to an additional feature of the present invention, the membrane switch is provided at the seat cushion in a manner that the two contact portions arranged at every other contact portion are positioned in each of a front common seating load area and a rear common seating load area. The front common seating load area is a common area between a center seating load area and a front seating load area. The center seating load area receives a pressure generated by a seating load of the occupant when the occupant is seated on the seat cushion with a largest positional deviation in the lateral direction of the vehicle relative to a standard seating load area which receives the pressure generated by the seating load of the occupant when the occupant is seated at the standard position. The front seating load area receives the pressure generated by the seating load of the occupant when the occupant is seated on the seat cushion with a largest positional deviation in a front direction and the lateral direction of the vehicle relative to the standard seating load area. The rear common seating load area is a common area between the center seating load area and a rear seating load area. The rear seating load area receives the pressure generated by the seating load of the occupant when the occupant is seated on the seat cushion with a largest positional deviation in a rear direction and the lateral direction of the vehicle relative to the standard seating area.

Consequently, the load of the occupant seated on the seat cushion is always applied as the seating load to the front common seating load area or to the rear common seating load area, both of which are predetermined. According to the invention, the two contact portions arranged at every other contact are positioned in each of the front common seating load area and the rear common seating load area. Consequently, the seating state of the occupant on the seat cushion is reliably detected even when the occupant is seated at a deviated position relative to the standard position in the longitudinal and the lateral directions.

According to an additional feature of the present invention, the membrane switch formed into the bar shape is positioned to the left or to the right of a non-detecting area which is provided in a central portion of the standard seating load area so as to extend in the longitudinal direction of the vehicle and which receives no load of the occupant. The standard seating load area receives the pressure generated by the seating load of the occupant when the occupant is seated at the standard position.

Consequently, the seating state of the occupant is detected outside the non-detecting area. The non-detecting area refers to a space between the buttocks of the occupant seated on the seat cushion. When the occupant is seated on the seat cushion, an area that corresponds to the non-detecting area does not sink, that is, is not deformed, because a material of the seat cushion is hardened due to the low temperature, a weight of the occupant is too small to make the seat cushion sink, or the like. As a result, the seating load applied to the non-detecting area is not detected. In this disclosure, therefore, the area which is positioned in the central portion of the standard seating load area (the seating load area that the occupant is highly likely to be seated on) so as to extend in the longitudinal direction of the vehicle is set to be the non-detecting area. The membrane switch is positioned outside the non-detecting area, to the left of the non-detecting area, and thus the false detection, that is, the state where the contact portions are not turned on even when the occupant is seated on the seat cushion, is prevented. Thus, the seating state of the occupant is reliably detected. In addition, a shape of the space between the buttocks of the occupant seated on the seat cushion, based on which the non-detecting area is set, is curved and not in a straight shape. Consequently, the set of the two contact portions which are arranged at every other contact is less likely to be positioned outside the seating load area when the membrane switch, on which the contact portions are arranged in the straight line, is positioned outside the non-detecting area, to the right of the non-detecting area.

According to an additional feature of the present invention, the membrane switch formed into the bar shape is positioned so as to cross the non-detecting area which is provided in the central portion of the standard seating load area so as to extend in the longitudinal direction of the vehicle and which receives no load of the occupant. The standard seating load area receives the pressure generated by the seating load of the occupant when the occupant is seated at the standard position. The contact portions are positioned at both portions of the seat cushion in the lateral direction of the vehicle relative to the non-detecting area.

Consequently, the contact portions are positioned at left and right portions of the seat cushion in the lateral direction of the vehicle relative to the non-detecting area, which is positioned in the central portion of the standard seating load area in the longitudinal direction of the vehicle, by placing the membrane switch so as to diagonally cross the non-detecting area. Consequently, the seating state of the occupant is reliably detected when the occupant is seated on the seat cushion with the positional deviation in the longitudinal direction or the lateral direction of the vehicle.

According to an additional feature of the present invention, a distance between adjacent contact portions from among the plurality of contact portions which are provided at the membrane switch is set to be in a range from 17 millimeters to 46 millimeters.

Consequently, the distance between the adjacent contact portions of the membrane switch is set to be from 17 millimeters to 46 millimeters, and thus, a distance between the two of the contact portions, which are arranged so as to include another contact portion interposed therebetween, is set to be in a range from 34 millimeters to 92 millimeters. By setting the distance between the two of the contact portions, which are arranged so as to include another contact interposed therebetween, at 34 millimeters or longer, the false detection caused by the large baggage or the like is prevented. By setting the distance between the two of the contact portions, which are arranged so as to include another contact interposed therebetween, at 92 millimeter or shorter, the seating state of a small child at the age of, for example, six is reliably detected.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a view illustrating a seating surface of a seat cushion indicated with outlines of seating load areas which are used for detection by a seat occupancy detection device of this disclosure;
Fig. 2 is a view illustrating a membrane switch;
Fig. 3 is a cross-sectional diagram taken on line III-III in Fig. 2;
Fig. 4 is a view illustrating an upper side of the membrane switch, where an upper film is provided;
Fig. 5 is a view illustrating a lower side of the membrane switch, where a lower film is provided;
Fig. 6 is a circuit diagram of the membrane switch;
Fig. 7 is a view illustrating the membrane switch provided at a seat cushion of a vehicle in a longitudinal direction of the vehicle to function as the seat occupancy detection device;
Fig. 8 is another view illustrating the membrane switch provided at the seat cushion of the vehicle in the longitudinal direction of the vehicle;
Fig. 9 is a view illustrating the membrane switch according to a second embodiment of this disclosure, which is arranged at the seat cushion so as to cross a non-detecting area NGA;
Fig. 10 is another view illustrating the membrane switch which is arranged at the seat cushion so as to cross the non-detecting area NGA;
Fig. 11 is a view illustrating a membrane switch according to a third embodiment of this disclosure;
Fig. 12 is a view illustrating an upper side of the membrane switch, where an upper film is provided;
Fig. 13 is a view illustrating a lower side of the membrane switch, where a lower film is provided;
Fig. 14 is a circuit diagram of the membrane switch;
Fig. 15 is a view illustrating the membrane switch provided at the seat cushion of the vehicle in the longitudinal direction of the vehicle to function as the seat occupancy detection device; and
Fig. 16 is another view illustrating the membrane switch provided at the seat cushion of the vehicle in the longitudinal direction of the vehicle.

### DETAILED DESCRIPTION

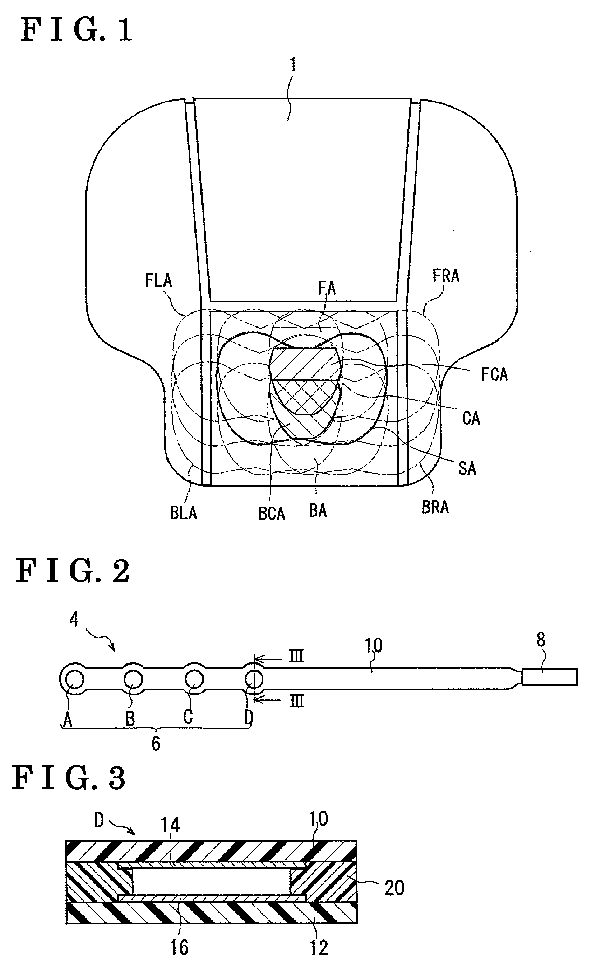

A first embodiment of a seat occupancy detection device 2 according to this disclosure when used in a seat for a vehicle will be explained with reference to illustrations of drawings as follows. Fig. 1 is a plane view illustrating a seating surface of a seat cushion 1 of the seat for one person, which is adapted to be provided at the vehicle. The upper direction, the lower direction, the right direction and the left direction in Fig. 1 refer to the front direction, the rear direction, the right direction and the left direction of the seat cushion 1, respectively.

As shown in Fig. 1, a seating load area is indicated on the seating surface of the seat cushion 1. The seating load area refers to an area where a predetermined seating pressure (hereinafter referred to as "the seating pressure") is generated when an occupant, for example, a six-year-old occupant, is seated on the seat cushion 1. In a rear central portion of the seating surface, an outline of a standard seating load area SA is indicated in the full line, showing a butterfly-like profile. The standard seating load area SA refers to the seating load area when the occupant is seated at a standard position of the seating surface of the seat cushion 1, that is, when the occupant is seated without a positional deviation. In a central portion of the standard seating load area SA, an outline of a center seating load area CA is indicated. The center seating load area CA refers to the seating load area that may always receive the pressure generated by a seating load of the occupant even when the occupant is seated with a largest positional deviation, that is, being most deviated, relative to the standard position in the left or right direction. Outlines of a front-left seating load area FLA and a front-right seating load area FRA are also indicated on the seating surface. The front-left seating load area FLA refers to the seating load area when the occupant is seated with a largest positional deviation, that is, being most deviated, relative to the standard position in the front and left directions. The front-right seating load area FRA refers to the seating load area when the occupant is seated with a largest positional deviation, that is, being most deviated, relative to the standard position in the front and right directions. A front seating load area FA is set as an area which is located in the front-left seating load area FLA and the front-right seating load area FRA, and which may always receive the pressure generated by the seating load. A front common seating load area FCA is set as an area that is common to the front seating load area FA and the center seating load area CA. Outlines of a rear-left seating load area BLA and a rear-right seating load area BRA are also indicated. The rear-left seating load area BLA refers to the seating load area when the occupant is seated with a largest positional deviation, that is, being most deviated, relative to the standard position in the rear and left directions. The rear-right seating load area BRA refers to the seating load area when the occupant is seated with a largest positional deviation, that is, being most deviated, relative to the standard position in the rear and right directions. A rear seating load area BA is set as an area which is located in the rear-left seating load area BLA and the rear-right seating load area BRA, and which may always receive the pressure generated by the seating load of the occupant. A rear common seating load area BCA is set as an area that is common to the rear seating load area BA and the center seating load area CA.

The seat occupancy detection device 2 functions when a membrane switch 4 is provided at the seat cushion 1. As shown in Fig. 2, the membrane switch 4 is formed into a bar shape and provided with contact portions 6. The contact portions 6 include, for example, a contact portion A, a contact portion B, a contact portion C and a contact portion D (four contact portions) which are arranged on the membrane switch 4 so as to form a straight line that extends from an end portion of the membrane switch 4 in a lengthwise direction of the membrane switch 4. A distance is provided between the adjacent contact portions 6, that is, for example, between the contact portion A and the contact portion B. A distal end of the membrane switch 4 is provided with a connector 8 that is connected to an ECU (an Electronic Control Unit) which determines a seating state of the occupant. The distance between the adjacent contact portions 6 is set to be, for example, 40 millimeters. In this case, the distance between two of the contact portions 6, which are arranged so as to include another contact portion 6 interposed therebetween, is 80 millimeters. This value refers to a desirable value for detecting the seating state of the six-year-old occupant.

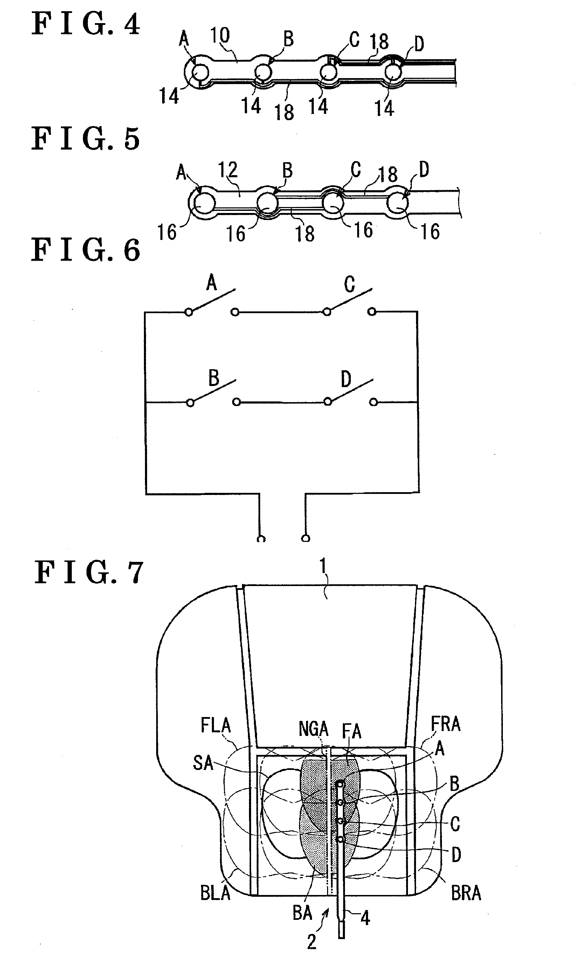

The membrane switch 4 includes an insulating spacer 20, and a pair of an upper film 10 and a lower film 12 that sandwiches the insulating spacer 20. The upper film 10 and the lower film 12 are thin films made of, for example, polyethylene phthalate, and define an outline of the contact portions 6 and a conducting portion which will be described below. The insulating spacer 20 is made of, for example, PET (polyethylene terephthalate) and is formed so as to substantially match the shapes of the upper film 10 and the lower film 12. The insulating space 20 is provided with a through hole of a circular shape at a position that corresponds to a position of each of the contact portions 6. As shown in Fig. 3, each of the contact portions 6 includes an upper electrode 14 and a lower electrode 16 both of which are formed into a circular shape. The upper electrode 14 and the lower electrode 16 are positioned concentrically with each other on the upper film 10 and on the lower film 12 respectively so as to face each other at an opening made on the insulating spacer 20. When a load is applied to the contact portions 6 in a thickness direction of the membrane switch 4, the upper electrode 14 and the lower electrode 16 come in contact with each other and are turned on, thereby causing the current to flow. As a result, a signal is outputted. As shown in Fig. 4, on the upper film 10, the upper electrode 14 of the contact portion A and the upper electrode 14 of the contact portion B are electrically connected to one of electrodes of the connector 8 via a conducting portion 18. The upper electrode 14 of the contact portion C and the upper electrode 14 of the contact portion D are electrically connected to the other one of the electrodes of the connector 8 via the conducting portion 18. As shown in Fig. 5, on the lower film 12, the lower electrode 16 of the contact portion A and the lower electrode 16 of the contact portion C are electrically connected with each other, and the lower electrode 16 of the contact portion B and the lower electrode 16 of the contact portion D are electrically connected with each other via the conducting portion 18. Accordingly, as shown in Fig. 6, the current flows in a circuit of the membrane switch 4 when the contact portion A and the contact portion C (that is, two contact portions 6 from among the contact portions 6, the two contact portions 6 being arranged at every other contact portion 6) are turned on at the same time or when the contact portion B and the contact portion D (that is, two contact portions 6 from among the contact portions 6, the two contact portions 6 being arranged at every other contact portion 6) are turned on at the same time. As a result, the signal is outputted.

In the rear central portion of the seat cushion 1, a non-detecting area NGA is provided in a longitudinal direction of the vehicle as shown in Fig. 7. The non-detecting area NGA is, for example, 20 millimeters in width and is positioned in the central portion of the standard seating load area SA, on which the occupant is highly likely to be seated. The value, 20 millimeters, is a statically derived value so as to define an area of the seat surface where no seating pressure is applied when the six-year-old occupant is seated in low temperatures because this area corresponds to a space between the buttocks of the six-year-old occupant. The membrane switch 4 of the seat occupancy detection device 2 is provided at the seat cushion 1 so as to be positioned outside the non-detecting area NGA, to the right of the non-detecting area NGA in parallel to the non-detecting area NGA as shown in Fig. 7. In this case, the contact portions A, B and C are positioned in the front seating load area FA, and the contact portions B, C and D are positioned in the rear seating load area BA. Accordingly, neither a set of the contact portions A and C, nor a set of the contact portions B and D is positioned in the non-detecting area NGA, where the seating load is difficult to be detected. At the same time, the set of the contact portions A and C, or the set of the contact portions B and D is always positioned in the seating load area when the occupant is seated at any position in the front-left seating load area FLA (the seating load area when the occupant is seated with the largest positional deviation relative to the standard seating load area SA in the front and left directions), the front-right seating load area FRA (the seating load area when the occupant is seated with the largest positional deviation relative to the standard seating load area SA in the front and right directions), the rear-left seating load area BLA (the seating load area when the occupant is seated with the largest positional deviation relative to the standard seating load area SA in the rear and left directions) and the rear-right seating load area BRA (the seating load area when the occupant is seated with the largest positional deviation relative to the standard seating load area SA in the rear and right directions). Consequently, an occurrence of a state where the occupant is seated on the seat cushion 1 but the contact 6 is not turned on, that is, an omission of detection, is prevented, and thus the seating state of the occupant is reliably detected.

Next, an operation of the seat occupancy detection device 2 having the above-described structure will be described below. According to the seat occupancy detection device 2 of the first embodiment, when the occupant is seated on the seat cushion 1, the current flows only in case that the contact portions A and C are turned on at the same time or in case that the contact portions B and D are turned on at the same time. This causes a seat occupancy detection signal to be outputted, and the ECU determines according to the seat occupancy detection signal whether or not an object on the seat cushion 1 is a human. Based on the detection result, the ECU, for example, enables an airbag system to operate or issues a warning that a seat belt is unfastened.

According to the seat occupancy detection device 2 having the above-described structure, the membrane switch 4 for detecting the seating state of the occupant includes the plural contact portions 6 arranged in the straight line, and the membrane switch 4 outputs the seat occupancy detection signal in case that the contact portions A and C are turned on at the same time by the load of the occupant seated on the seat cushion 1 or in case that the contact portions B and D are turned on at the same time by the load of the occupant seated on the seat cushion 1. Accordingly, no seat occupancy detection signal is outputted when one of the contact portions 6 of the membrane switch 4 is turned on by a load that is applied to a small area of the seat cushion 1, for example, when the baggage is placed on the seat cushion 1, thereby preventing a false detection. In addition, a set of the contact portions 6, which are arranged at every other contact, is always positioned in the seating load area when the seating load area corresponds to any position among the four seating load areas (the front-left seating load area FLA, the front-right seating load area FRA, the rear-left seating load area BLA and the rear-right seating load area BRA) that are the most deviated positions relative to the standard seating load area SA in the front, rear, left or right direction, and thus it is reliably detected that the occupant is seated on the seat cushion 1.

In the first embodiment, the seating state of the occupant is detected outside the non-detecting area NGA. The non-detecting area NGA refers to an area of the seat surface which corresponds to the space between the buttocks of the occupant seated on the seat cushion 1. This area of the seat surface of the seat cushion 1 does not sink, that is, is not deformed when the occupant is seated on the seat cushion 1 because a material of the seat cushion is hardened due to the low temperature, a weight of the occupant is too small to make the seat cushion 1 sink, or the like. As a result, the seating load applied to the non-detecting area NGA is not detected. In this embodiment, therefore, the area which is positioned in the central portion of the standard seating load area SA (the seating load area that the occupant is highly likely to be seated on) so as to extend in the longitudinal direction of the vehicle is set to be the non-detecting area NGA. The membrane switch 4 is positioned outside the non-detecting area NGA, to the left of the non-detecting area NGA, and thus the omission of the detection, that is, the state where the contact 6 is not turned on even when the seating load of the occupant is applied to the seat cushion 1, is prevented. Thus, the seating state of the occupant is reliably detected.

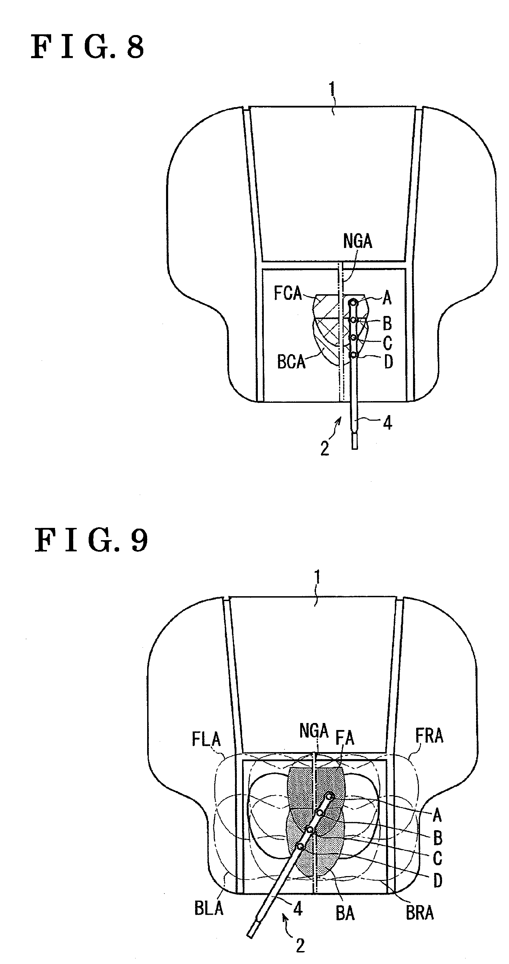

In the first embodiment, the contact portions A, B, C and D of the membrane switch 4 are arranged, or positioned, on the basis of the front seating load area FA and the rear seating load area BA, however, this disclosure is not limited thereto. For example, as shown in Fig. 8, the contact portions A, B and C may be positioned in the front common seating load area FCA (refer to Fig. 1), and the contact portions B, C and D are positioned in the rear common seating load area BCA (refer to Fig. 1). In this case, a set of the contact portions A and C is positioned in the front common seating load area FCA, and a set of the contact portions B and D is positioned in the rear common seating load area BCA. As in when the contact portions 6 are arranged on the basis of the front seating load area FA and the rear seating load area BA, the membrane switch 4 for detecting the seating state of the occupant includes plural contact portions 6 arranged in the straight line, and the membrane switch 4 outputs the seat occupancy detection signal in case that two of the contact portions 6, which are arranged at every other contact, are turned on at the same time by the load of the occupant seated on the seat cushion 1. Accordingly, it is prevented that the seat occupancy detection signal is outputted when the load is applied to the small area of the seating surface of the seat cushion 1, for example, when the baggage is placed on the seat cushion 1. The front common seating load area FCA is a predetermined area and refers to the area to which the seating load of the occupant is always applied when the occupant is seated in the front portion of the seat cushion 1 and in the standard position. The rear common seating load area BCA refers to an area to which the seating load of the occupant is always applied to when the occupant is seated in a rear portion of the seat cushion 1 and in the standard position. Consequently, by arranging the set of the contact portions A and C (that is, two of the contact portions 6, which are arranged at every other contact) in the front common seating load area FCA and arranging the set of the contact portions B and D (that is, two of the contact portions 6, which are arranged at every other contact) in the rear common seating load area BCA, it is reliably detected that the occupant is seated on the seat cushion 1.

The distance between the adjacent contact portions 6 of the membrane switch 4 is set to be 40 millimeters, that is, the distance between every other contact portions 6 (that is, for example, the distance between the contact portions A and C) is 80 millimeters. By setting the distances at the above-described values, the seating state of the occupant at the age of six or older is also detectable.

Next, a second embodiment of the seat occupancy detection device 2 according to the present invention when used in the seat for the vehicle will be explained with reference to illustrations of drawings as follows. In the second embodiment, the membrane switch 4 is provided at the seat cushion 1 so as to be diagonal relative to the longitudinal direction of the vehicle, and thus the membrane switch 4 crosses the non-detection area NGA. Specifically, as shown in Fig. 9, the contact portions A, B are positioned in the front seating load area FA, to the right of the non-detecting area NGA, and the contact portion C is positioned in the front seating load area FA, to the left of the non-detecting area NGA. The contact portion B is positioned in the rear seating load area BA, to the right of the non-detecting area NGA, and the contact portions C, D are positioned in the rear seating load area BA, to the left of the non-detecting area NGA. Other structures of the second embodiment are identical to those of the first embodiment, and thus explanations will be omitted.

As with the first embodiment, the membrane switch 4 is positioned outside of the non-detecting area NGA in the second embodiment, thereby preventing the occurrence of the state where the seating load is applied to the seat cushion 1 but the contact portion 6 is not turned on, that is, the omission of detection. In addition, the seating load of the occupant, who is seated on the seat cushion 1 with a large positional deviation in the longitudinal direction or the lateral direction of the vehicle, is detected more reliably because the contact portions A, B, C and D are divided into left and right portions of the seat cushion 1 relative to the non-detecting area NGA by placing the membrane switch 4 so as to diagonally cross the non-detecting area NGA. Consequently, the seating state of the occupant is reliably detected when the occupant is seated on the seat cushion 1 with the large positional deviation in the longitudinal direction or the lateral direction of the vehicle.

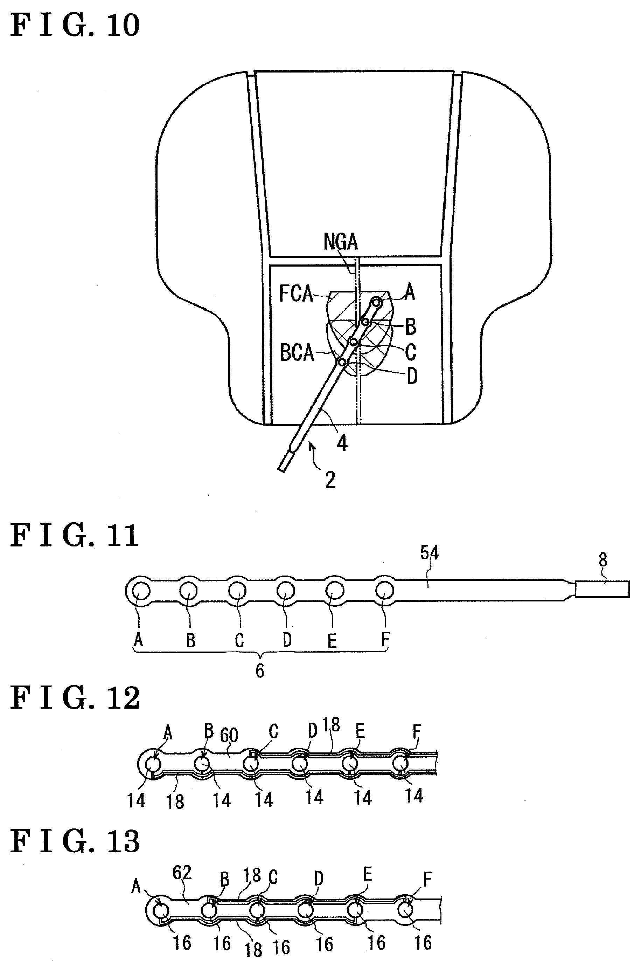

In the second embodiment, the contact portions A, B, C and D of the membrane switch 4 are arranged, or positioned, on the basis of the front seating load area FA and the rear seating load area BA, however, this disclosure is not limited thereto. For example, as shown in Fig. 10, the contact portions A and B are positioned in the front common seating load area FCA (refer to Fig. 1), to the right of the non-detecting area NGA, and the contact portion C is positioned in the front common seating load area FCA, to the left of the non-detecting area NGA. The contact portion B is positioned in the rear common seating load area BCA (refer to Fig. 1), to the right of the non-detecting area NGA; and the contact portions C and D are positioned in the rear common seating load area BCA, to the left of the non-detecting area NGA. By placing the membrane switch 4 so as to diagonally cross the non-detecting area NGA, the contact portions 6 are divided into the left and right portions of the seat cushion 1 relative to the non-detecting area NGA, and the contact portions 6 are distributed also over the front and rear portions of the seat cushion 1. The set of contact portions A and C is positioned in the front common seating load area FCA and the set of contact portions B and D is positioned in the rear common seating load area BCA. Consequently, the seating state of the occupant is reliably detected when the occupant is seated on the seat cushion 1 with the large positional deviation in the longitudinal direction or the lateral direction of the vehicle.

Next, a third embodiment of the seat occupancy detection device 2 according to the present invention when used in the seat for the vehicle will be explained with reference to illustrations of drawings as follows.

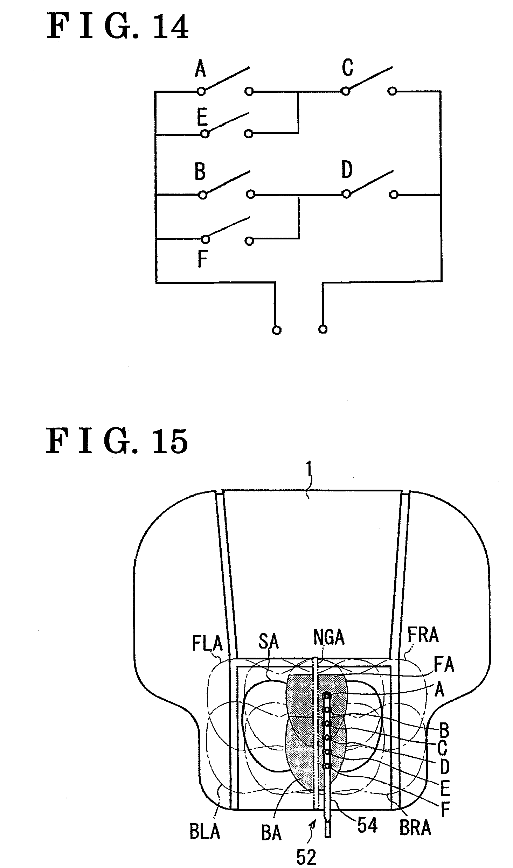

As shown in Fig. 11, a membrane switch 54 used in a seat occupancy detection device 52 is formed into a bar shape and provided with the contact portions 6. The contact portions 6 include, for example, the contact portion A, the contact portion B, the contact portion C, the contact portion D, a contact portion E and a contact portion F (six contact portions) which are arranged on the membrane switch 54 so as to form a straight line in a lengthwise direction of the membrane switch 54 from an end portion of the membrane switch 54. A distance is provided between the adjacent contact portions 6, that is, for example, between the contact portion A and the contact portion B. Specifically, on an upper film 60, the upper electrodes 14, 14, 14, 14 of the contact portions A, B, E and F are electrically connected to one of the electrodes of the connector 8 via the conducting portion 18, and the upper electrodes 14, 14 of the contact portions C and D are electrically connected to the other one of the electrodes of the connector 8 via the conducting portion 18 as shown in Fig. 12. On a lower film 62, the lower electrode 16, 16, 16 of the contact portions A, C and E are electrically connected with one another via the conducting portion 18, and the lower electrode 16, 16, 16 of the contact portions B, D and F are electrically connected with one another via the conducting portion 18 as shown in Fig. 13. Accordingly, as shown in Fig. 14, the current flows in a circuit of the membrane switch 54 in the following four cases, that is, when the contact portions A and C (that is, two of the contact portions 6, which are arranged at every other contact) are turned on at the same time, when the contact portions B and D (that is, two of the contact portions 6, which are arranged at every other contact) are turned on at the same time, when the contact portions C and E (that is, two of the contact portions 6, which are arranged at every other contact) are turned on at the same time or when the contact portions D and F (that is, two of the contact portions 6, which are arranged at every other contact) are turned on at the same time. As a result, the current flows in the circuit and the signal is outputted.

A distance from the contact portion A to the contact portion F of the third embodiment is set to be equal to the distance from the contact portion A to the contact portion D of the first embodiment. That is, a distance between the adjacent contact portions 6 of the membrane switch 54 is set to be 24 millimeters in the third embodiment.

The membrane switch 54 of the seat occupancy detection device 52 is provided at the seat cushion 1 so as to be positioned outside the non-detecting area NGA, to the right of the non-detecting area NGA in parallel to the non-detecting area NGA as shown in Fig. 15. In this case, the contact portions A, B, C and D are positioned in the front seating load area FA, and the contact portions C, D, E and F are positioned in the rear seating load area BA. Accordingly, the set of the contact portions A and C, the set of the contact portions B and D, the set of the contact portions C and E, or the set of the contact portions D and F is always positioned in the front-left seating load area FLA (the seating load area when the occupant is seated with the largest positional deviation relative to the standard seating load area SA in the front and left directions), front-right seating load area FRA (the seating load area when the occupant is seated with the largest positional deviation relative to the standard seating load area SA in the front and right directions), rear-left seating load area BLA (the seating load area when the occupant is seated with the largest positional deviation relative to the standard seating load area SA in the rear and left directions), and rear-right seating load area BRA (the seating load area when the occupant is seated with the largest positional deviation relative to the standard seating load area SA in the rear and right directions). Consequently, two sets of the contact portions 6 that are used for the detection are positioned in each of the front seating load area FA and the rear seating load area BA, and thus a detection resolution is enhanced and a detection accuracy is improved.

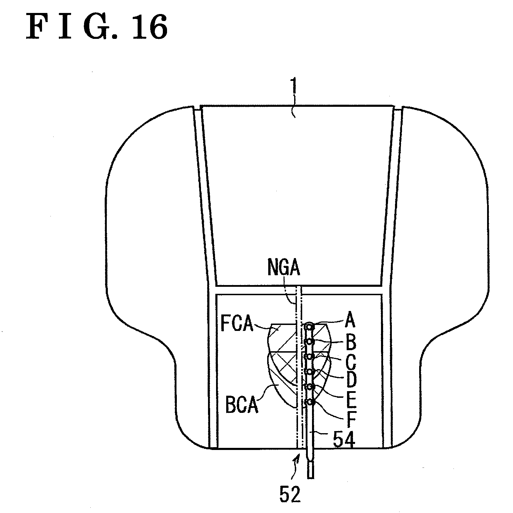

In the third embodiment, the contact portions A to F of the membrane switch 54 are arranged, or positioned, on the basis of the front seating load area FA and the rear seating load area BA, however, this disclosure is not limited thereto. For example, as shown in Fig. 16, the contact portions A, B, C and D may be positioned in the front common seating load area FCA, and the contact portions C, D, E and F may be positioned in the rear common seating load area BCA. In this case, the set of the contact portions A and C, and the set of the contact portions B and D are positioned in the front common seating load area FCA, and the set of the contact portions C and E, and the set of the contact portions D and F are positioned in the rear common seating load area BCA. That is, the two sets of the contact portions 6 are positioned in each of the front common seating load area FCA and the rear common seating load area BCA, and thus the detection resolution is enhanced and the detection accuracy is improved.

In the third embodiment, the distance from the contact portion A to the contact portion F is set to be equal to the distance from the contact portion A to the contact portion D of the first embodiment, however, this disclosure is not limited thereto. By setting the distance between the adjacent contact portions 6 equal to that of the first embodiment, an area outside the front seating load area FA and the rear seating load area BA is included in a detection area, and thus the detection area is increased.

Alternatively, the distance between the adjacent contact portions 6 may be set so that at least three contact portions from among the contact portions A to F are positioned in each targeted area of detection (that is, the front seating load area FA, the rear seating load area BA and the like).

In the above-described embodiments, the membrane switch 54 outputs the seat occupancy detection signal based on the set of the contact portions 6, which are arranged so as to include another contact portion 6 interposed therebetween, however, this disclosure is not limited thereto. The membrane switch 4, 54 may output the seat occupancy detection signal based on the set of the contact portions 6 between which other two or more contact portions 6 are interposed (for example, a set of the contact portion A and the contact portion D).

The structures described in the above embodiments are only examples, and this disclosure is not limited thereto. Various changes may be made if not thereby departing from the scope of the present invention as defined by the appended claims.

## Claims

1. A seat occupancy detection device (2, 52) comprising:
a membrane switch (4, 54) formed in a bar shape and adapted to be provided at a seat cushion (1), the membrane switch (4, 54) including a plurality of contact portions (6A, 6B, 6C, 6D) arranged in a straight line in a lengthwise direction of the membrane switch (4, 54), two of the contact portions (6A, 6C/6B, 6D) from among the plurality of contact portions (6A, 6B, 6C, 6D) being connected in series such that the membrane switch (4, 54) outputs a seat occupancy detection signal when two of the contact portions (6A, 6C/6B, 6D) are turned on at the same time by a load of an occupant seated on the seat cushion (1), r **characterised in that** the two contact portions (6A, 6C/6B, 6D) from among the plurality of contact portions (6) are arranged at every other contact portion (6), wherein
the membrane switch (4, 54) is provided at the seat cushion (1) in a manner that at least a set of the two contact portions (6A, 6C/6B, 6D) is positioned in a seating load area when the seating load area is positioned anywhere among four seating load areas (FLA, FRA, BLA, BRA), the seating load area receiving the load of the occupant who is seated on the seat cushion (1), and the four seating load areas (FLA, FRA, BLA, BRA) each being most deviated in a longitudinal direction or a lateral direction of a vehicle on which the seat cushion (1) is mounted relative to a standard position located in a rear center portion of the seat cushion (1), the standard position being an area on which an occupant sits without a positional deviation.

2. The seat occupancy detection device (2, 52) according to Claim 1, wherein
the membrane switch (4, 54) is provided at the seat cushion (1) in a manner that the two contact portions (6) arranged at every other contact portion (6) are positioned in each of a front common seating load area (FCA) and a rear common seating load area (BCA),
the front common seating load area (FCA) being a common area between a center seating load area (CA) and a front seating load area (FA), the center seating load area (CA) receiving a pressure generated by a seating load of the occupant when the occupant is seated on the seat cushion (1) with a largest positional deviation in the lateral direction of the vehicle relative to a standard seating load area (SA) which receives the pressure generated by the seating load of the occupant when the occupant is seated at the standard position, the front seating load area (FA) receiving the pressure generated by the seating load of the occupant when the occupant is seated on the seat cushion (1) with a largest positional deviation in a front direction and the lateral direction of the vehicle relative to the standard seating load area (SA),
the rear common seating load area (BCA) being a common area between the center seating load area (CA) and a rear seating load area (BA), the rear seating load area (BA) receiving the pressure generated by the seating load of the occupant when the occupant is seated on the seat cushion (1) with a largest positional deviation in a rear direction and the lateral direction of the vehicle relative to the standard seating area (SA).

3. The seat occupancy detection device (2, 52) according to any one of Claims 1 and 2, wherein the membrane switch (4, 54) formed into the bar shape is positioned to the left or to the right of a non-detecting area (NGA) which is provided in a central portion of a standard seating load area (SA) to extend in the longitudinal direction of the vehicle and which receives no load of the occupant, the standard seating load area (SA) receiving a pressure generated by a seating load of the occupant when the occupant is seated at the standard position.

4. The seat occupancy detection device (2, 52) according to any one of Claims 1 and 2, wherein the membrane switch (4, 54) formed into the bar shape is positioned to cross a non-detecting area (NGA) which is provided in a central portion of a standard seating load area (SA) to extend in the longitudinal direction of the vehicle and which receives no load of the occupant, the standard seating load area (SA) receiving a pressure generated by the seating load of the occupant when the occupant is seated at the standard position, and
the contact portions (6) are positioned at both portions of the seat cushion (1) in the lateral direction of the vehicle relative to the non-detecting area (NGA).

5. The seat occupancy detection device (2, 52) according to any one of Claims 1 through 4, wherein a distance between adjacent contact portions (6) from among the plurality of contact portions (6) which are provided at the membrane switch (4, 54) is set to be in a range from 17 millimeters to 46 millimeters.

## Patentansprüche

1. Sitzbelegungserfassungseinrichtung (2, 52), mit:
einem Membranschalter (4, 54), der stabförmig ausgestaltet ist und dazu angepasst ist, an einem Sitzpolster (1) bereitgestellt zu werden, wobei der Membranschalter (4, 54) eine Vielzahl von Kontaktabschnitten (6A, 6B, 6C, 6D) umfasst, die in einer geraden Linien in einer Längsrichtung des Membranschalters (4, 54) angeordnet sind, wobei zwei der Kontaktabschnitte (6A, 6C/6B, 6D) unter der Vielzahl von Kontaktabschnitten (6A, 6B, 6C, 6D) in Reihe verbunden sind, so dass der Membranschalter (4, 54) ein Sitzbelegungserfassungssignal ausgibt, wenn zwei der Kontaktabschnitte (6A, 6C/6B, 6D) durch eine Last eines Insassen, der auf dem Sitzpolster (1) sitzt, gleichzeitig eingeschaltet werden, **dadurch gekennzeichnet, dass** die zwei Kontaktabschnitte (6A, 6C/6B, 6D) unter der Vielzahl von Kontaktabschnitten (6) an jedem anderen Kontaktabschnitt (6) angeordnet sind, wobei
der Membranschalter (4, 54) an dem Sitzpolster (1) auf eine Weise bereitgestellt ist, dass zumindest ein Satz der zwei Kontaktabschnitte (6A, 6C/6B, 6D) in einem Sitzlastbereich positioniert sind, wenn der Sitzlastbereich irgendwo unter vier Sitzlastbereichen (FLA, FRA, BLA, BRA) positioniert ist, wobei der Sitzlastbereich die Last des Insassen, der auf dem Sitzpolster (1) sitzt, empfängt, und die vier Sitzlastbereiche (FLA, FRA, BLA, BRA) jeweils in eine Längsrichtung oder eine Seitenrichtung eines Fahrzeugs, an dem das Sitzpolster (1) angebracht ist, relativ zu einer Standardposition, die an einem hinteren mittleren Abschnitt des Sitzpolsters (1) liegt, am meisten abweichen, wobei die Standardposition ein Bereich ist, auf dem ein Insasse ohne eine positionelle Abweichung sitzt.

2. Sitzbelegungserfassungseinrichtung (2, 52) gemäß Anspruch 1, wobei
der Membranschalter (4, 54) an dem Sitzpolster (1) auf eine Weise bereitgestellt ist, dass die zwei Kontaktabschnitte (6), die an jedem anderen Kontaktabschnitt (6) angeordnet sind, jeweils in einem vorderen gemeinsamen Sitzlastbereich (FCA) und einem hinteren gemeinsamen Sitzlastbereich (BCA) positioniert sind,
wobei der vordere gemeinsame Sitzlastbereich (FCA) ein gemeinsamer Bereich zwischen einem mittleren Sitzlastbereich (CA) und einem vorderen Sitzlastbereich (FA) ist, wobei der mittlere Sitzlastbereich (CA) einen Druck empfängt, der durch eine Sitzlast des Insassen erzeugt wird, wenn sich der Insasse auf das Sitzpolster (1) setzt, mit einer größten positionellen Abweichung in der seitlichen Richtung des Fahrzeugs relativ zu einem Standardsitzlastbereich (SA), der den Druck empfängt, der durch die Sitzlast des Insassen erzeugt wird, wenn der Insasse an der Standardposition sitzt, wobei der vordere Sitzlastbereich (FA) den Druck empfängt, der durch die Sitzlast des Insassen erzeugt wird, wenn der Insasse auf dem Sitzpolster (1) sitzt, mit der größten positionellen Abweichung in eine vordere Richtung und die seitliche Richtung des Fahrzeugs relativ zu dem Standardsitzlastbereich (SA),
wobei der hintere gemeinsame Sitzlastbereich (BCA) ein gemeinsamer Bereich zwischen dem mittleren Sitzlastbereich (CA) und dem hinteren Sitzlastbereich (BA) ist, wobei der hintere Sitzlastbereich (BA) den Druck empfängt, der durch die Sitzlast des Insassen erzeugt wird, wenn der Insasse auf dem Sitzpolster (1) sitzt, mit einer größten positionellen Abweichung in eine hintere Richtung und die seitliche Richtung des Fahrzeugs relativ zu dem Standardsitzbereich (SA).

3. Sitzbelegungserfassungseinrichtung (2, 52) gemäß einem der Ansprüche 1 und 2, wobei der Membranschalter (4, 54), der stabförmig ausgestaltet ist, links oder rechts von einem Nichterfassungsbereichs (NGA) positioniert ist, der in einem mittleren Abschnitt eines Standardsitzlastbereichs (SA) bereitgestellt ist, um sich in einer Längsrichtung des Fahrzeugs zu erstrecken, und der keine Last des Insassen empfängt, wobei der Standardsitzlastbereich (SA) einen Druck empfängt, der durch eine Sitzlast des Insassen erzeugt wird, wenn der Insasse an der Standardposition sitzt.

4. Sitzbelegungserfassungseinrichtung (2, 52) gemäß einem der Ansprüche 1 und 2, wobei der Membranschalter (4, 54), der stabförmig ausgestaltet ist, positioniert ist, um sich quer über einen Nichterfassungsbereich (NGA) zu erstrecken, der in einem mittleren Abschnitt eines Standardsitzlastbereichs (SA) bereitgestellt ist, um sich in die Längsrichtung des Fahrzeugs zu erstrecken, und der keine Last des Insassen empfängt, wobei der Standardsitzlastbereich (SA) einen Druck empfängt, der durch die Sitzlast des Insassen erzeugt wird, wenn der Insasse an der Standardposition sitzt, und
die Kontaktabschnitte (6) an beiden Abschnitten des Sitzpolsters (1) in der seitlichen Richtung des Fahrzeugs relativ zu dem Nichterfassungsbereich (NGA) positioniert sind.

5. Sitzbelegungserfassungseinrichtung (2, 52) gemäß einem der Ansprüche 1 bis 4, wobei eine Entfernung zwischen benachbarten Kontaktabschnitten (6) unter der Vielzahl von Kontaktabschnitten (6), die an dem Membranschalter (4, 54) bereitgestellt sind, eingestellt ist, um in einem Bereich von 17 Millimeter bis 46 Millimeter zu liegen.

## Revendications

1. Dispositif de détection d'occupation de siège (2, 52) comprenant :
un commutateur à membrane (4, 54) réalisé en une forme de barre et conçu pour être prévu au niveau d'un coussin de siège (1), le commutateur à membrane (4, 54) comprenant une pluralité de parties de contact (6A, 6B, 6C, 6D) agencées en ligne droite dans une direction de longueur du commutateur à membrane (4, 54), deux des parties de contact (6A, 6C/6B, 6D) parmi la pluralité de parties de contact (6A, 6B, 6C, 6D) étant connectées en série de sorte que le commutateur à membrane (4, 54) délivre un signal de détection d'occupation de siège lorsque deux des parties de contact (6A, 6C/6B, 6D) sont activées au même moment par une charge d'un occupant assis sur le coussin de siège (1), **caractérisé en ce que** les deux parties de contact (6A, 6C/6B, 6D) parmi la pluralité de parties de contact (6) sont agencées au niveau d'une partie de contact (6) sur deux, dans lequel
le commutateur à membrane (4, 54) est prévu au niveau du coussin de siège (1) d'une manière telle qu'au moins un ensemble des deux parties de contact (6A, 6C/6B, 6D) est positionné dans une zone de charge d'appui lorsque la zone de charge d'appui est positionnée n'importe où parmi quatre zones de charge d'appui (FLA, FRA, BLA, BRA), la zone de charge d'appui recevant la charge de l'occupant qui est assis sur le coussin de siège (1), et les quatre zones de charge d'appui (FLA, FRA, BLA, BRA) étant chacune les plus écartées dans une direction longitudinale ou une direction latérale d'un véhicule sur lequel le coussin de siège (1) est monté par rapport à une position standard située dans une partie centrale arrière du coussin de siège (1), la position standard étant une zone sur laquelle un occupant s'assied sans écart de positionnement.

2. Dispositif de détection d'occupation de siège (2, 52) selon la revendication 1, dans lequel
le commutateur à membrane (4, 54) est prévu au niveau du coussin de siège (1) d'une manière telle que les deux parties de contact (6) agencées au niveau d'une partie de contact (6) sur deux sont positionnées dans chacune d'une zone de charge d'appui commune avant (FCA) et d'une zone de charge d'appui commune arrière (BCA),
la zone de charge d'appui commune avant (FCA) étant une zone commune entre une zone de charge d'appui centrale (CA) et une zone de charge d'appui avant (FA), la zone de charge d'appui centrale (CA) recevant une pression générée par une charge d'appui de l'occupant lorsque l'occupant est assis sur le coussin de siège (1) avec un écart de positionnement le plus grand dans la direction latérale du véhicule par rapport à une zone de charge d'appui standard (SA) qui reçoit la pression générée par la charge d'appui de l'occupant lorsque l'occupant est assis à la position standard, la zone de charge d'appui avant (FA) recevant la pression générée par la charge d'appui de l'occupant lorsque l'occupant est assis sur le coussin de siège (1) avec un écart de positionnement le plus grand dans une direction avant et la direction latérale du véhicule par rapport à la zone de charge d'appui standard (SA),
la zone de charge d'appui commune arrière (BCA) étant une zone commune entre la zone de charge d'appui centrale (CA) et une zone de charge d'appui arrière (BA), la zone de charge d'appui arrière (BA) recevant la pression générée par la charge d'appui de l'occupant lorsque l'occupant est assis sur le coussin de siège (1) avec un écart de positionnement le plus grand dans une direction arrière et la direction latérale du véhicule par rapport à la zone d'appui standard (SA).

3. Dispositif de détection d'occupation de siège (2, 52) selon l'une quelconque des revendications 1 et 2, dans lequel le commutateur à membrane (4, 54) réalisé en la forme d'une barre est positionné à la gauche ou à la droite d'une zone de non détection (NGA) qui est prévue dans une partie centrale d'une zone de charge d'appui standard (SA) de manière à s'étendre dans la direction longitudinale du véhicule et qui ne reçoit pas de charge de l'occupant, la zone de charge d'appui standard (SA) recevant une pression générée par une charge d'appui de l'occupant lorsque l'occupant est assis à la position standard.

4. Dispositif de détection d'occupation de siège (2, 52) selon l'une quelconque des revendications 1 et 2, dans lequel le commutateur à membrane (4, 54) réalisé en la forme d'une barre est positionné de manière à traverser une zone de non détection (NGA) qui est prévue dans une partie centrale d'une zone de charge d'appui standard (SA) de manière à s'étendre dans la direction longitudinale du véhicule et qui ne reçoit pas de charge de l'occupant, la zone de charge d'appui standard (SA) recevant une pression générée par la charge d'appui de l'occupant lorsque l'occupant est assis à la position standard, et
les parties de contact (6) sont positionnées au niveau des deux parties du coussin de siège (1) dans la direction latérale du véhicule par rapport à la zone de non détection (NGA).

5. Dispositif de détection d'occupation de siège (2, 52) selon l'une quelconque des revendications 1 à 4, dans lequel une distance entre les parties de contact (6) adjacentes parmi la pluralité de parties de contact (6) qui sont prévues au niveau du commutateur à membrane (4, 54) est fixée pour être dans une plage de 17 millimètres à 46 millimètres.
